# EUROPEAN PATENT APPLICATION

(11) **EP 1 521 181 A1**
(43) Date of publication of application: **06.04.2005**
(21) Application number: 03292451.6
(22) Date of filing: 03.10.2003
(51) Int. Cl.: G06F 17/30

(54) **Method and apparatus for automatically proposing an accompaniment to a text content**

(71) Applicant: Sony France S.A., 92110 Clichy (FR)
(72) Inventor: Pachet, Francois, 75010 Paris (FR)
(74) Representative: Bertrand, Didier

(57) **Abstract**

The invention can automatically propose an accompaniment to a text content to be processed (TC), through the following procedure:
- in a preparation phase, analysing pre-existing material (18) containing text, using an automatically executing algorithm to create word associations comprising two or more words (MW) connected by at least one link (WL) according to at least one predetermined criterion,
- providing access to a number of candidate accompaniments, each having assigned at least one attribute value (IMI) that is susceptible of being comprised in said pre-existing material,
- identifying, when present in the text content to be processed, at least one word therein that is a word (MW) comprised in a said created word association,
- determining whether said created word association that comprises said identified word comprises a said attribute value, and
- proposing as said accompaniment at least one candidate accompaniment having a said attribute value comprised in said word association that comprises said identified word.

The accompaniment can be music from a music file, and the pre-existing material can be obtained from Internet pages using a web crawler.

## Description

The present invention relates to a method and apparatus for producing an accompaniment to textual documents, in which the accompaniment is linked to the document's textual contents. The "accompaniment" can be audio, e.g. music or sound effects, or visual, e.g. still images or video clips, or audio and visual combined.

For instance, it is sometimes desirable to accompany a text, such as an e-mail, web page, prose, etc., with music or images having some form of thematic link with its contents.

In the state of the art, an appropriate accompaniment to a text must be determined manually. Indeed, although there exist on the Internet many music - and now image - databases from which possible accompaniment items are accessible by various criteria, including genre, artist, rhythm, dominant colour, scene, etc., they all require some conscious input from the person (henceforth referred to as "compiler") in order to be associated with a text. Thus, in a classical approach, a compiler searching e.g. for appropriate music to accompany a text of a Web page under construction would typically have to perform the following actions:
- consider the contents of the text,
- imagine a type of music or sound that can enhance the message being conveyed by the text,
- recollect from personal knowledge examples of possibly appropriate music or sound,
- make a selection from one of the examples,
- acquire the selected example.

The above process can be tedious and time consuming. Also, the choices are limited to the personal knowledge of the person.

Indeed, traditional music query systems involve a closed loop between a user (single or multiple) and music databases. But experiments show that humans are not very good at expressing upfront their taste, nor at selecting explicitly music, in particular from databases they do not know. The very activity of searching music in a non goal-oriented way is often considered as difficult and even meaningless.

In the context of video, there has been proposed in a conference paper by C. Vaucelle, G. Davenport and T. Jehan at the Siggraph 2003 conference (San Diego), ACM Press, 27-31 July 2003. a computer tool for improvising movies according to the inter-relationship between personal videos and the story of an experience. This tool retrieves movie segments and sounds from a database in response to words identified in a story being typed. To this end, it requires the user to associate beforehand his/her chosen descriptive keywords to be associated with each video clip of the database.

Such an approach is explicit in nature, inasmuch as it can only retrieve a particular video sequence if it has a keyword that is an exact match with a word of the story being typed. Moreover, the associations produced are still limited to the knowledge and inspiration of the user when manually entering the keywords.

In view of the foregoing, an object of the present invention is to provide a tool which can automate at least some aspects of the search, and suggest interesting choices of accompaniment without recourse to personal knowledge of its user.

More particularly, the present invention provides, according to a first aspect, a method of automatically proposing an accompaniment to text content to be processed, comprising the steps of:
- in a preparation phase, analysing pre-existing material containing text, using an automatically executing algorithm to create word associations comprising two or more words connected by at least one link according to at least one predetermined criterion,
- providing access to a number of candidate accompaniments, each having assigned at least one attribute value that is susceptible of being comprised in said pre-existing material,
- identifying, when present in the text content to be processed, at least one word (identified word) in that text content that is a word comprised in a said created word association,
- determining whether said created word association that comprises said identified word comprises a said attribute value, and
- proposing as said accompaniment at least one candidate accompaniment having a said attribute value comprised in said word association that comprises said identified word.

This approach is remarkable in that a pertinent accompaniment can be proposed even for a word of the text content that is not a word of an attribute for that accompaniment: the selection of the proposed accompaniment is then based on the link(s), direct or with one or more intervening words of the word association, through which the word of the text content and attribute can be meaningfully linked.

As the word associations are produced automatically by the algorithm on the basis of the scanned text contained in pre-existing material, there is no need for the user to create specific keywords or associations, as in the prior art.

Moreover, the word associations can be created on the basis of material which extends substantially beyond the user's personal knowledge. This allows for interesting and unexpected links to be made, in which the user can discover a proposed accompaniment which is evocative of the inputted text, but which he/she would probably not have thought of.

There can be further comprised a step of filtering the text to be processed using a parsing algorithm, so as to submit only meaningful or key words thereof to said identifying step.

Similarly, there can be provided a step of selecting only meaningful or key words of the text of the pre-existing material, using a parsing algorithm.

It will be appreciated that in the determining step, the attribute value and identified word in the word association can be different from each other, so allowing the method to produce a substantially implicit type of evocative accompaniment. It can, however, also be the case that the identified word and the attribute value are the same words, if the text to processed happens to contain an identified attribute value for an accompaniment (case of a "direct hit").

One the criterion for creating a link between two or more words of the pre-existing material can be that the two or more co-occur in the pre-existing material with a separating distance less than a determined threshold.

This criterion provides an advantageous way of ensuring reasonably that the linked words have potentially something in common to create a meaningful word association.

In the preferred embodiment, there is attributed a weighting or strength value to a created link between two or more the words co-occurring in the pre-existing material as a function of at least one among:
- the positional closeness of the co-occurring meaningful words in the pre-existing material,
- the frequency of co-occurrence of the co-occurring words in the pre-existing material,
- the uncommonness of at least one of the co-occurring words,
wherein the accompaniment is selected as function of the weighting value for the or each link between the word forming the attribute value and the identified inputted word comprised in the word association.

Preferably, the selection of the accompaniment takes into account the number of intervening links between the identified input word and the attribute value.

The pre-existing material can be accessed through a server system using an automated searching tool.

The server system can comprise the Internet network, the pre-existing material can comprise at least one web page, and the automated searching tool can be a search engine programmed to crawl through successive web pages.

Typically, the preparation phase can be pursued at arbitrary moments to enrich and update the word associations for future proposed accompaniments.

In the embodiment considered, the accompaniment is a music/sound accompaniment.

The attribute can be an objectively identifiable attribute of the accompaniment. For instance, in the case of a music/sound accompaniment, it can be at least one of:
- a music title,
- an artist name,
- a musical genre,
- cultural background information,
- a selection or the totality of the words forming lyrics of a music title.

The attribute can also be a subjectively identifiable attribute of the accompaniment. For instance, in the case of a music/sound accompaniment, it can be at least one of:
- a subjective description of a music title content, instances of which are:
- a global energy value,
- a closeness relationship between music titles,
- a mood,
- verbal evocations.

The method can further comprise a step of compiling an electronic file which comprises the text contents and either:
i) at least one file enclosing the contents of an accompaniment, e.g. an audio file, or
ii) data for accessing the contents of an accompaniment,
the file being formatted to be readable for reproducing the text contents and the accompaniment.

There can further be provided the step of incorporating into the electronic file command data for executing at least one of the following:
- establishing the duration of the or each item of accompaniment to be perceived,
- synchronising the content of the accompaniment to a passage of a text content currently displayed, e.g. by estimation from a time since opening or by detecting scroll commands,
- adjusting a parameter affecting the perception of the accompaniment, e.g. the volume for an audio accompaniment.

According to a second aspect, the invention relates to an apparatus for automatically proposing an accompaniment to a text content to be processed, comprising:
- means, operative in a preparation phase, for analysing pre-existing material containing text, using an automatically executing algorithm to create word associations comprising two or more words connected by at least one link according to at least one predetermined criterion,
- means for accessing a number of candidate accompaniments, each having assigned at least one attribute value that is susceptible of being comprised in the pre-existing material,
- means for identifying, when present in the text content to be processed, at least one word therein that is a word comprised in a created word association,
- means for determining whether the created word association that comprises the identified word comprises an attribute value, and
- means for proposing as the accompaniment at least one candidate accompaniment having an attribute value comprised in the word association that comprises the identified word.

The optional features presented above in the context of the method according to the first aspect are applicable mutatis mutandis to this apparatus.

According to a third aspect, the invention relates to an electronic file produced according to the method according to the first aspect, with or without any one of its optional features, comprising the text contents and either:
i) at least one file enclosing the contents of an accompaniment, e.g. an audio file, or
ii) data for accessing the contents of an accompaniment, the file being formatted to be readable for reproducing the text contents and the accompaniment.

The file may also incorporate command data for executing at least one of the following:
- establishing the duration of the or each item of accompaniment to be perceived,
- synchronising the content of the accompaniment to a passage of a text content currently displayed, e.g. by estimation from a time since opening or by detecting scroll commands,
- adjusting a parameter affecting the perception of the accompaniment, e.g. the volume for an audio accompaniment.

According to a fourth aspect, the invention relates to an electronic file containing at least one word association produced by the method according to the first aspect, with or without any one of its optional features.

According to a fifth aspect, the invention relates to a computer program loadable into the memory of a computer, comprising software code portions for performing the method according to the first aspect, with or without any one of its optional features.

According to a sixth aspect, the invention relates to a a data carrier containing the computer program according to the fifth aspect.

According to a seventh aspect, the invention relates to a storage medium containing the computer program according to the fifth aspect.

The invention and its advantages shall become more apparent from reading the following description of the preferred embodiments, given purely as non-limiting examples, with reference to the appended drawings, in which:
- Figure 1 is a schematic diagram showing the functional units that constitute a first embodiment of the invention,
- Figure 2 are schematic diagram of a co-occurrence matrix builder and co-occurrence matrix used in the system of figure 1, showing the linking of meaningful words used by the system,
- Figure 3 is a schematic diagram showing the functional units that constitute a second embodiment of the invention, and
- Figure 4 is a diagram illustrating with a concrete example the different steps in selecting music titles to accompany a given textual document using the system of figure 3.

The following illustrative description considers the case of a system which automatically suggests a musical accompaniment to a text prepared on a computer terminal and, if needs be, further produces a musicalised text file comprising the text and the suggested musical accompaniment item(s). Here, the term "music" is to be interpreted as also encompassing sound effects, whether they be recorded or synthesised e.g. of natural phenomena (sea waves, waterfalls, animal cries, etc.), machinery, urban noise, etc.

For the description of the preferred embodiment, there shall be considered a context in which a compiler disposes of:
- text content TC document, the subject of study, to which an accompaniment
- in this example music - is to be associated. This document can be of various sorts, such as:

- a textual document *per se,* such as a mail, a web page, a letter, a technical document, a paper, produced on a word processor or the like, etc.,
- a non textual document to which is associated some textual information, for instance, a video recording to which textual annotations are associated, e.g. describing scenes, situations, or any semantic information,
- a set of documents, such as a mailbox, a set of letters, etc,

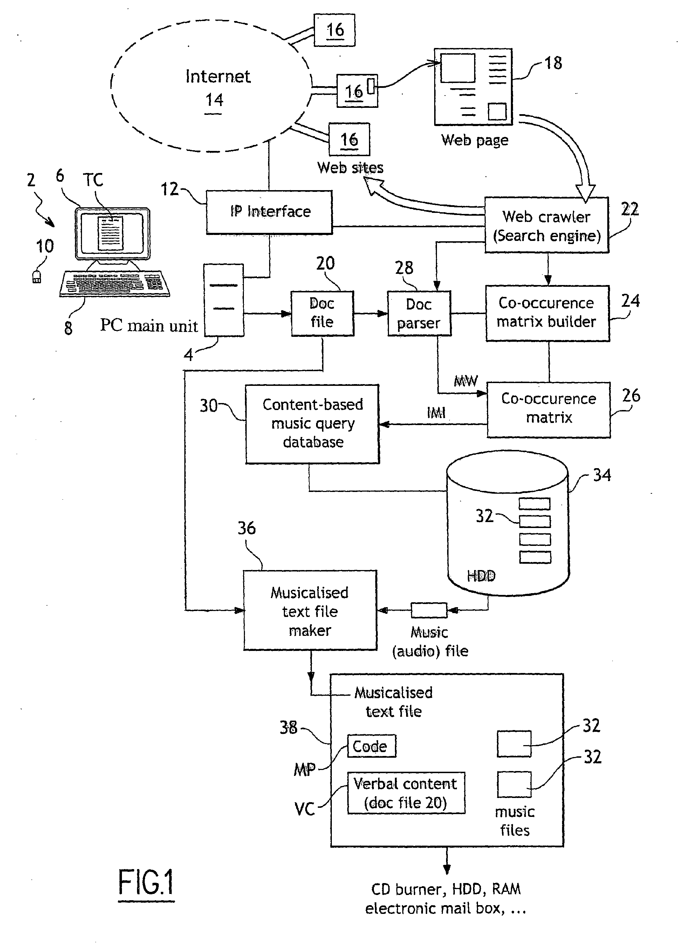

(In figure 1, the text content TC is shown on a computer display 6 and formatted as a document file.);
- a database of music titles. This database can be located on the compiler's personal storage space, or can be accessible on-line, or through a network, possibly through a peer-to-peer link.
   (In figure 1, the database is in the form of a hard disk drive HDD storing audio files 34.);
- a database of metadata describing music titles. The term metadata generically covers the values of attributes - objective and subjective - assigned to each music title. This metadata database can have various formats, and can contain arbitrary information on music titles, such as editorial information (e.g. song names, artist names, genres), or similarity relations (e.g. titles which are "close" to another, etc. The meta database can be local or remote, e.g. accessible through a server, or a peer-to-peer network.
   (In figure 1, this database takes the form of a content-based music query database 30.);
- a database, referred to as a co-occurrence matrix - or network - , containing Meaningful Words (abbreviation MW) which are significant words - or key words - and indications of their co-occurrence in browsed pages.

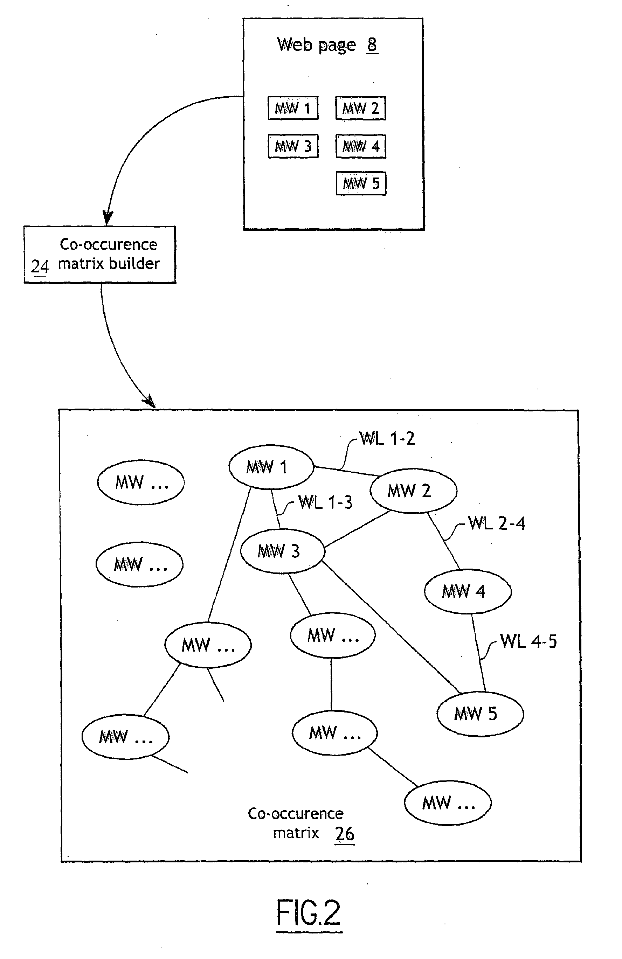

   (In figure 1, this matrix 26 is constructed by a co-occurrence matrix builder 24; an example of how it links MWs is shown in figure 2.)

The embodiment implements a process that finds automatically the titles in the title database that best accompanies the document's content. Its aim is to provide automatically a musical "interpretation" or background to the document.

The general architecture of the first embodiment of the invention is illustrated schematically in figure 1. For ease of understanding, the system divided into a number of functionally defined modules, some of which have been briefly identified above.

The system is implemented with a personal computer (PC) 2 having a main unit 4 containing the microprocessor motherboard, memory (containing the main program for managing/creating functional units and implementing the present music accompaniment proposal method), application boards, a monitor 6, keyboard 8 and mouse or trackball 10. The PC includes an Internet Protocol (IP) interface 12 for enabling a dial-up or broadband connection to the Internet 14 through an access provider, whereby websites 16 can be accessed, enabling the PC to process information from numerous web pages 18. Typically, the PC has software such as a word processor, a maibox, etc. for inputting and preparing a text content TC through the keyboard 8 or a voice recognition device. The text content is managed as a document file 20 formatted in accordance with the software specifications by which it is produced.

The PC 2 cooperates with a web crawler 22, i.e. a search engine programmed to roam through websites 16 and access the web pages 18 they contain. The roaming can be effected through a totally random - or constrained random - crawl of websites, using techniques known per se. The accessed pages 18 are analysed by a co-occurrence matrix builder 24 whose task is to produce and update a co-occurrence matrix 24 of the type defined above.

The PC 2 further comprises, in the form of software tools:
- a document parser 28, which analyses the words of an inputted document file 20 to be musicalised, and extracts MWs, notably key words, of its text content TC ;
- a content-based music query database 30, which contains the above-mentioned metadata, henceforth designated by the term "Item of music information" (abbreviation IMI) in the present context of music accompaniment searching.

An IMI is defined as a word or group of words, expressible in an alphanumeric word format, by which a music title can be identified, or into which a music title can be catalogued, i.e. an attribute of the music title. Typically, IMIs correspond to music descriptors, or more generally to the class music metadata. The notion of music descriptors and metadata is well known in itself and shall not be detailed.

An IMI can be of two types:
i) objective, typically editorial information, e.g. music titles, artist names, genres, recording labels, tempo, instrumental source (trumpet, quartet, synthesiser, ...), or
ii) subjective, such as an attributed "global energy" rating, general mood (sad, festive, ...), evocative words, a closeness relationship as mentioned above (e.g. "O Sole Mio" close to "It's Now Or Never" (language); etc.

The IMIs can also include words forming the lyrics of a song title. In this case, a "lyric" IMI for a given song title can comprise a set of selected keywords or evocative words taken from that title's lyrics, or even all the words retained after a parsing operation that removes common words serving simply for grammatical construction.

The above IMI metadata can have various formats, and can contain arbitrary information on music titles, such as similarity relations (e.g. titles which are "close"), etc.

For simplification, the first embodiment manages just music titles as IMIs. Typically, the music title is just the name of the corresponding song. Preferably the name is formatted so that its constituent words can be identified, e.g. using the format "We Will Rock You" rather than "We_Will_Rock_You".

In the example, the audio files 32 for the music titles are stored locally on the PC's hard disk 34. They can also/alternatively be accessed from external sources, such as downloading sites, peer-to-peer music sharing systems etc; and
- a musicalised text file maker 36, which combines the document file 20 to be musicalised with one or several audio files 32 selected by the music query database 30 to produce a musicalised text file 38. The latter comprises music play code MP executable by a receiving terminal, such as another PC, to command its media player to produce the music of the integrated file(s) 32 when the text content TC of the document file 20 is being displayed/scrolled. In a variant, the audio file(s) 32 are replaced by the electronic information enabling to identify the corresponding music title, whereby the audio contents are then loaded separately by recipient terminal, e.g. from its own hard disk or by access to a server.

The system 1 operates in two modes:
- a "batch" or "background" mode, in which the IP interface 12, web crawler 22, document parser 28 and co-occurrence matrix builder 24 are active to roam through the web and enrich the co-occurrence matrix 26, and
- a "live" or "user" mode, in which the document parser 28, music query database 30 and - if the user wants the system to produce a musicalised text file - the musicalised filemaker 36 are active propose potentially suitable musical accompaniments and possibly to produce a musicalised document for a current text content being processed.

In the batch mode, roamed web pages 18 are fed from the web crawler 22 to the co-occurrence matrix builder 24. The co-occurrence matrix builder analyses each crawled web page in terms of its word content,
- extracts "Meaningful Words" (MWs), i.e. nouns, verbs, adjectives, adverbs, in single-word or word-group form, which bring out the meaning of the text. MWs therefore exclude "trivial" words such as articles, conjunctions, etc. which serve essentially for grammatical construction. To this end, the document parser 28 can also be used to analyse the text of the web pages, applying known techniques.
- identifies co-occurrences of MWs,
- establishes a weighted link between co-occurring MWs, such that the matrix can be queried with any given MW and produce in return those linked co-occurring MWs with some predetermined ordering or filtering.

The construction of the co-occurrence matrix 26 takes place in the background or batch mode, and shall be explained with reference to figure 2.

Figure 2 illustrates how the co-occurrence matrix builder 24 constructs the co-occurrence matrix on the basis of a grouping of meaningful words contained in a given browsed web page 18.

In the example, the web page 18 considered has a passage containing five meaningful words MW1-MW5. These are identified as such by the co-occurrence matrix builder 24 in conjunction with the document parser 28 - or by the web crawler 2 itself if suitably equipped - through an elementary filter which eliminates articles, conjunctions, prepositions, etc. The five MWs are loaded into the co-occurrence matrix 26 together with weighted links, generically denoted WL. A weighted link ties together MWs that co-occur according to predetermined criteria to form a word association. The weight of a given link is an expression of how strongly two or more MWs thereby linked are associated. In what follows, a specific weighted link connecting meaningful words MWi and MWj is denoted WLi-j, for arbitrary i and j. For example, the weighted link between MW1 and MW3 is identified as WL1-3.

Two MWs Wi and Wj are attributed a weighted link WLi-j if their separation in a passage, page or possibly group of pages is less than a prescribed threshold. The latter can be defined in terms of topographical distance in the page, number of intervening words of any type, or number of intervening MWs, etc.

The co-occurrence matrix builder 24 attributes a weight value to a particular weighted link WLi-j as a function of:
- the frequency of co-occurrence of the meaningful words MWi and MWj, cumulated over successive analysed web pages: the greater the frequency, the stronger the weighting,
- the distance separating MWi and MWj in a current passage: the shorter the distance, the stronger the weighting, and
- the "uncommonness" of words MWi and/or MWj. Here, the concept of uncommonness - how infrequently the MW appears overall - is used to give an indication of that word's distinctiveness, or "impact" effect. The more an MW is uncommon, the more likely it is considered to have importance, and hence the stronger the weighting.

Other criteria can be introduced, e.g. to create a link between words Wi and Wj only if they co-occur a number of times in different documents.

Accordingly, the construction of the co-occurrence matrix is an evolving dynamic process in which both the number of MWs accumulated and the mesh of their weighted links evolves.

Techniques for constructing such a co-occurrence matrix 26 are known in themselves in different contexts, as are algorithms suitable for weighting the links WL and indexing the MWs for access.

Note that a word association can comprise an arbitrary number of words, from two onwards. Where it comprises more than two words, the words can be concatenated along single line of links connecting nearest neighbours, or by more a more complex system of links, e.g. forming loops and multiple interconnections.

The IMIs are initially entered at the level of the content-based music query database 30. In the first embodiment, the IMIs are thus limited to the set of catalogued music titles.

To prepare the co-occurrence matrix 26 for exploitation by the system, some input is provided to indicate which of the MWs stored in the matrix are words contained the IMIs of the music query database.

To this end, the database 30 interrogates the co-occurrence matrix 26 with the words or word groups that constitute its respective song titles to determine:
i) whether the word/word group in question corresponds to a MW in the co-occurrence matrix. If such is the case, the corresponding word then becomes identified as an IMI-type MW (i.e. an MW which also carries at least one item of music information useable by the music query database to select a music title), and
ii) if, so, what are the other MWs linked to that corresponding MW, and the respective values of the weighted links WL involved.

The information determined at ii) above is organised and stored in the co-occurrence matrix 26 in cooperation with the content-based music query database 30. The following elements of information thereby become accessible:
i) which of the MWs in the matrix are linked to which IMI-type MWs of the database 30. Here the link between a MW and an IMI-type MW can be:
   - direct: i.e. both the MW and IMI-type MW have been found co-occurring, and only one weighted link separates them, or
   - indirect, i.e. one or more intervening MWs and their weighted links are involved in a concatenation to associate a particular MW to an IMI-type MW; and
ii) for those MWs linked directly or indirectly to an IMI-type MW, the origin or strength of the weighting coefficient of the link(s) involved and, where several IMIs are thus associated, a hierarchy of the latter according to the strength of the associated weighted links, number of intervening MWs in the case of an indirect association, personal preferences inputted by a user, etc.

The above match mode for constructing the word associations of the co-occurrence matrix can be initiated at any time. In this way, new web pages can be roamed and their texts can serve to enrich the co-occurrence matrix with new word associations and to update existing links for a future search of a proposed accompaniment.

In the "active" or "user" mode, the "batch" mode is interrupted and the co-occurrence matrix 26 and content-based music query database 30 cooperate to propose at least one music title to accompany a text content TC to musicalise. The procedure is as follows.

The document file 20 containing the text content, e.g. an e-mail message, is initially processed by the document parser 28 to extract its meaningful words or sentences (MWs). These extracted MWs are considered to characterise the semantic text content of the document.

Techniques for implementing such an automated parsing procedure are in themselves known. For instance, some word processors have an automatic synthesising feature which extracts key aspects of a document.

Generally, the document parser 28 can operate according to three basic approaches:
1) a naïve approach implementing a "naïve" algorithm,
2) a less naïve approach in which a syntactic analyser is used to spot particular words or word sequences representing nouns, proper nouns, adjectives, and ruling out syntactically irrelevant items, so obtaining the required MWs, and
3) a machine learning technique to learn appropriate document-to-meaningful words mappings. In this last approach, the user to teach the system how to spot the right words in the document.

The output of the document parser is the set of identified meaningful words and possibly the respective passages where they are located in the document.

Each MW from the document parser 28 is inputted to the co-occurrence matrix 26, which responds by performing the following routine:
i) is the inputted MW an MW stored in the co-occurrence matrix ? If no, then next MW, else ii),
ii) is the inputted MW associated to an IMI-type MW with an appropriate weighting coefficient in its link(s) WL? If no, then next MW, else iii),
iii) output to content-based music query database 30 the or each appropriately linked IMI-type MW(s), sorted according to strength of link(s).

In response to step iii), the database 30 shall receive a word or word group which corresponds to - or is contained in - one of its music titles. It identifies that music title and proposes it for the accompaniment to that part of the text content. In a fully automatic mode, it further calls the corresponding audio file from the hard disk, from which it is transferred to the musicalised text file maker 36.

For instance, an MW processed at step iii) may be the word group "undersea exploration", for which the co-occurrence matrix 26 has weighted links above a specified strength with the following other MWs: 1) "North Sea", 2) "ocean current", 3) "submarine", .... The third linked MW "submarine" has been identified in the batch mode as an IMI-type MW in respect of the music title "Yellow Submarine"; the other linked MWs are not identified to any other music title IMI of the music query database 30. Accordingly, the co-occurrence matrix 26 shall produce at step iii) the IMI-type MW "submarine".

The music query database 30 shall compare that IMI with the words forming its music titles, and shall thereby identify the music title "Yellow Submarine". It shall thereby propose the music title "Yellow Submarine" as the accompaniment to the passage containing the MW "undersea".

Note that where a word association comprises more than two words, an IMI can be prompted from an inputted word of text content to which it is not directly connected, but rather connected by one or more intervening words of that word association. For instance, taking the inputted text word "undersea exploration", the word association yielding "submarine" may be constructed as follows :
"undersea" - WLi - "Nautilus" - WLj - "submarine".

Here, the connection between "undersea" and "submarine" was obtained by virtue of the intervening word "Nautilus", which may have been separately associated to "undersea" and "submarine" with specific weighted links WLi and WLj at different web pages.

Where there are two separate links involved, as above, or more, the strength of the overall link (e.g. between "undersea" and "submarine") is calculated on the basis of each separate link involved. Thus the strength of the link takes into account the number of links involved; generally the links involved combine to give a weaker strength of link, as their number increases.

Naturally, the system also accommodates for the simple case of a "direct hit" where the inputted meaningful word corresponds exactly to an IMI, e.g. if it is "submarine". In that case, there is no link involved, and generally a maximum strength value is given to the "connection", i.e. the title "Yellow Submarine" would become the top candidate for the proposed accompaniment.

At that stage, the system 1 can be stopped to simply propose one or more particular music title(s) to accompany a given text content TC. The user is then free to accept/select and act on the choice to prepare a musicalised text accordingly through manual commands, e.g. using standard software editing and compilation tools. However, this task can also be left to the system, possibly after the user has confirmed choices and entered parameter settings, whereby the musicalised file maker 38 is activated to produce the musicalised text file 38 automatically.

Where several music titles are associated to a document, e.g. for different passages, various possibilities can be envisaged to:
- compile all the music titles in sequence, starting from those associated with semantic data at the start of the document,
- compile extracts of the music titles, each for a duration based on an estimate of an average time taken to read the corresponding passages of the document, so forming a medley, or from scroll commands when the text is viewed.

The thus-selected audio files 34 are supplied as input to the musical filemaker module 38, along with the content of the document file 20 having been processed. The filemaker integrates the music data of the audio file(s) 34 with the text data of the document 20, optionally with markers identifying a duration of play and/or a selection of a musical passage of the audio file to be played, and the associated passages.

The product of the filemaker 36 is a musicalised text file 38 that is formatted so that when read with a viewer software, produces the original text content TC on screen and causes a media player be activated to play the music titles in accordance with the markers. The indexing between the audio content and the text content can integrate various functional features, such as:
- an automatic audio play sequencer which plays the audio content of the file 40 according to an estimated or pre-programmed timing from the moment the document content is displayed, e.g. based on an average reading time,
- a detection of activated scroll functions to determine the passage being displayed and to command the playing of the music file (or extract) selected for that passage,
- if the document contains hypertext or "clickable" entries, means for playing the audio content associated with the hypertext or entry, or with parts of text in the immediate vicinity thereof.

The audiovisual file 40 from the musicalised text filemaker module 36 can be formatted according to various protocols and stored in any appropriate medium: CD, DVD, computer hard disk, memory card, RAM etc.

The musicalised files can thus be handled as composite software/firmware objects where they can be exploited for a variety of applications: sending by e-mail, making a computer presentation, providing an audio background to web pages, setting the atmosphere in a fiction or non-fiction script or storyboard, etc.

It shall be clear that the IMIs of the content-based music query database 30 can cover other types of information as well: artist name, musical genre, orchestral structure, rhythm, etc. The approach is in this case the same as in the above-described embodiment. However, the MWs of the co-occurrence matrix identified to IMIs shall be adapted accordingly.

For instance, where the music query database catalogues audio files in terms of:
i) music titles,
ii) artist name (this artist IMI may be divided into composing artist and performing artist),
iii) musical genre according to a set of descriptor values expressed by words, e.g. high energy, Italian romantic, Fifties Jazz, Seventies British Rock, Reggae, etc.

Each meaningful word of the IMIs i) to iii) shall be identified as such among the MWs of the co-occurrence matrix 26, where the corresponding MW exists in the latter.

For instance if the co-occurrence matrix contains the word group "British Rock", then that MW shall be identified as a partial IMI of "Seventies British Rock" in the music query database 30. Similarly, if the co-occurrence matrix contains the MW "Reggae", then that MW shall be identified as an exact IMI-type MW for the music query database.

By so expanding the IMI types associable to MWs, the system can propose less obvious and more subtle accompaniments. This illustrated by example 1 below.

Example 1 : Automated Musicalisation proposal of a specific textual document.

The textual document 20 processed in the user mode in this example comprises three passages P1, P2, P3, containing meaningful words as follows:
P1: WM = "Venice", "honeymoon";
P2: WM = "cappuccino", "saxophone";
P3: WM= "Europe", "aggressive", "fast-moving".

According to the co-occurrence matrix 26 of the example, for passage P1, "Venice" is linked with the MW "Italian", which has been identified as an IMI-type MW, being part of the word group for the genre value "Italian romantic", and separately "honeymoon" is linked with the MW "romantic", which is likewise identified an IMI-type MW, being part of the "Italian romantic" genre value. In response, the co-occurrence matrix shall return respectively the IMI-type MWs "Italian" and "romantic" for "Venice" and "honeymoon".

The links in question were established in the background mode, as explained above. The assimilation of selected MWs as being IMI-type MWs was also established in the background mode by scanning the words forming the IMIs contained in the music query database 30 and identifying the same words - where present - of the co-occurrence matrix 26 as IMI-type MWs.

The music query database 30 shall identify these two IMI words as present in the genre value "Italian romantic", and thus select that genre value for that passage P1. If several music titles are classed in that particular music genre value, then the database shall select one specific title according to a predefined criterion: associated user preference rating, duration, random choice, etc. The music query database may thus propose e.g. "O sole Mio" sung by Luciano Pavarotti.

Similarly, for passage P2, MWs "cappuccino" and "saxophone" happen to be suitably linked respectively to the IMI-type MWs "Neapolitan" and "Jazz". The music query database 30 has no single value of metadata value containing both of these words. However, it has one item which is the genre type with the value "Fifties Jazz" which contains the IMI-type MW "Jazz", and separately a music title under that genre metadata value which is "Neapolitan Girls". In a first step, the database shall direct to the Fifties Jazz genre value on the strength of the IMI-type MW "Jazz", and then try to seek a title which contains the other IMI-type MW "Neapolitan". In this manner, it can propose the title "Neapolitan Girls" associated to both the MWs "cappuccino" (by association of country of origin) and "saxophone" (by association with the instrument typically used to play Jazz).

Finally, for passage P3, the MWs: "Europe", "aggressive" and "fast-moving" are respectively linked to IMI-type MWs: "British","Rock", and both "high" and, separately "energy". For these linked MWs, the music query database shall initially identify the presence of IMI-type MW "British" in several of its listed genre values: "Sixties British Pop", "British Nineteenth Century Classic", ...,"Seventies British Rock", ... Taking into account the IMI-type MW "Rock", it shall narrow the selection range to a smaller set including "Seventies British Rock", and possibly other genre values having both of those words. Taking further account of IMI-type MWs "high" and "energy", it shall identify the descriptor value "high energy", which it then crosses with "Seventies British Rock" (and possibly other genres). The result produces a list of music titles falling under these assigned metadata values, including a number having an equal preference rating. Among that list, it choses "We Will Rock You" by Queen, which it proposes to accompany passage P3.

Where, as in the above example, several music titles are associated to a document, various possibilities can be envisaged to:
- compile all the music titles in sequence, starting from those associated with semantic data at the start of the document,
- compile extracts of the music titles, each for a duration based on an estimate of an average time taken to read the corresponding passages of the document, or from scroll commands when the text is viewed. Thus, in the illustrated example, each of the three music titles will be played automatically for just the few seconds it would normally a person to read the associated four or so lines, so forming a medley.

The thus-selected audio files 32 are supplied as input to the musical filemaker module 38, along with the content of the document file 20 having been processed. The filemaker integrates the music data of the audio file(s) 34 with the text data of the document 20, optionally with markers identifying a duration of play and/or a selection of a musical passage of the audio file to be played, and the associated passage P1-P3.

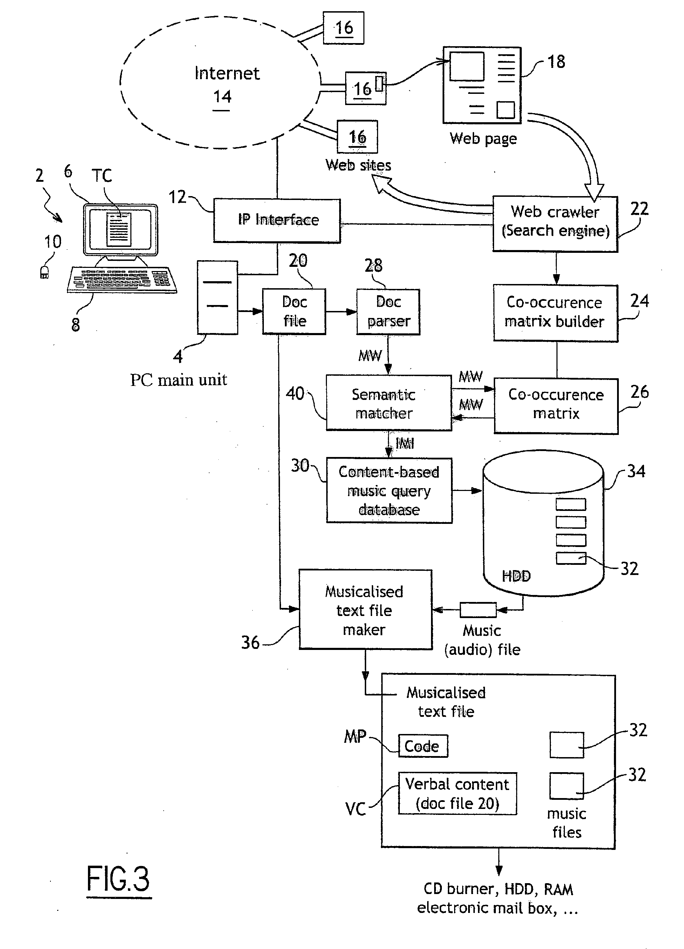

Figure 3 is a block diagram of a second embodiment, which differs from the first embodiment essentially in that it further comprises a semantic matcher module 40 cooperating with the co-occurrence matrix 26 and content-based music query database 30. Unless otherwise specified, the aspects of the first embodiment described with reference to figures 1 and 2 apply mutatis mutandis to the second embodiment, and shall not be repeated for conciseness.

The role of the semantic matcher module 40 is to organise the relationships between i) the metadata related to music titles of the music query database 30 and ii) the semantic information extracted from the document. More precisely, the output of the semantic matcher 40 is a set of titles ranked by their relevance to the document's content. The semantic matcher in this way enables many more matches to be made, and will therefore produce results of increased relevance.

Correspondingly, the role of the content-based music query database is adapted to build queries from metadata obtained from the semantic matcher, and retrieve music titles that correspond to the query.

The second embodiment is in this way optimised for analysing more complex listings of IMIs and their associations with MWs.

The semantic matcher 40 basically maps semantic information extracted by the document parser 28 to IMIs, as managed by the co-occurrence matrix builder 24. This can be achieved through many different approaches.

For instance, a naïve approach can be used, in which is computed a set of IMIs that is optimally close to the set of semantic information extracted by the document parser 28.

The outline of the algorithm used by the semantic matcher 40 can then be as follows:
1. For each word in semantic information from semantic matcher, compute the set of IMIs by querying the co-occurrence matrix 26, as constructed by the co-occurrence matrix builder 24;
2. Compute maximally co-occurring items of all these sets. These yield a set of IMIs that are maximally co-occurring with the set of words.

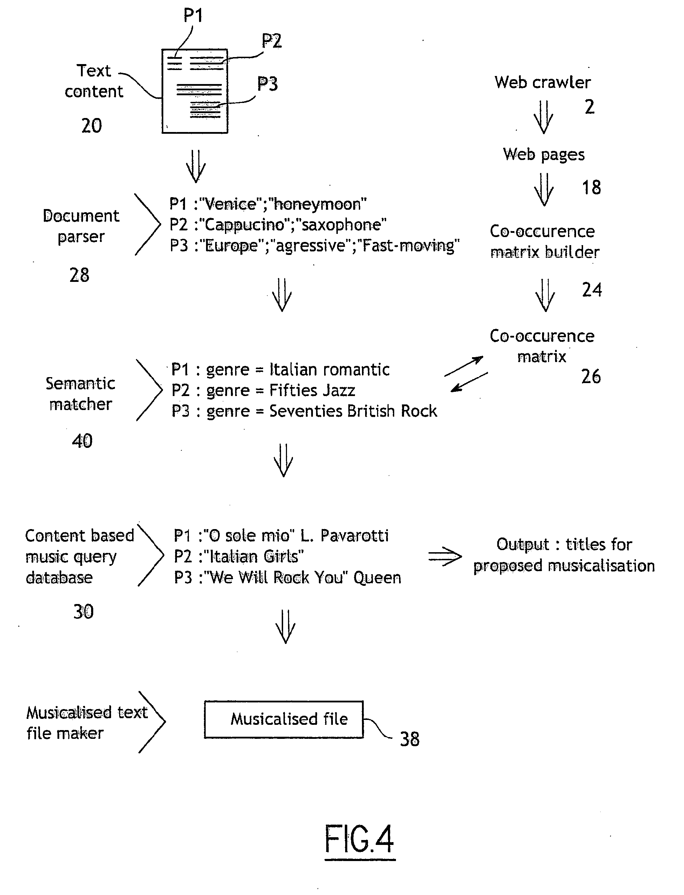

Figure 4 outlines the roles of the different functional units of the second embodiment to produce the musicalisation of example 1 above.

As for the first embodiment, the document parser 28 generates the selected MWs "Venice", .... for the respective passages P1 to P3.

In this case, the semantic matcher 40 has the task of identifying the optimised IMI-type MWs linked to the MWs delivered by the document parser, by cooperating with the co-occurrence matrix 26. The suitably linked IMI-type MWs "Italian", "romantic", etc. thus obtained are delivered to the content-based music query database 30, from which the corresponding specific music titles "O Sole Mio", ... are obtained.

These music titles are then presented to the user as a proposal for the musicalisation of the corresponding passages P1-P3 of text content 20.

If the user accepts the proposal, the system will then continue by creating the corresponding musicalised text file 38, using the musicalised text file module, as explained above.

It will be understood from the foregoing that the system can automatically - and intelligently - suggest specific music titles to associate with a document, in which there exists a pre-identified connotation between that title and some semantically meaningful words of the document.

The system 1 is applicable to all situations in which some sort of musical authoring process is involved. The system can therefore be implemented as various pluggins to existing authoring environments:
- as a Pluggin in for music players (e.g. Winamp^{(™)}, Itunes^{(™)},
- as a Pluggin for video editing programs (e.g. I-Movie^{(™)}, Adobe Premiere^{(™)},
- as a Pluggin for mail programs (e.g. Eudora^{(™)}, Mozilla^{(™)}, Outlook^{(™)}).

From the foregoing, it will be appreciated that the embodiment associates a source of *semantic information* (here typically obtained through a crawler or some sort of semantic network) with a source of *musical metadata* (obtained from editorial information servers, or any other source of textual metadata). By combining these two sorts of information, music can be "applied" to arbitrary documents, thereby solving the "endogenic" problem of traditional music query systems.

The association of music to documents, in particular documents to which users associate - explicitly or implicitly - personal information and ascribe meaning, allows the system to exploit information which is more reliably related to intimate characteristics of the user.

As explained in the in the introductory portion of the description, the invention can also be implemented for producing visual accompaniments. Indeed, there are now publicly available databases which contain catalogues of still or video image files and associated verbal descriptors. The titles of these image files can therefore be stored as for the music title, the images' verbal descriptors replacing the IMIs. Similarly, the concept can be used also for controlling aroma generators, where the each aroma is assigned to a title analogous to a music title and attributed a set of verbal descriptors which can be in the same way as IMIs.

It will be appreciated that the invention can be implemented in many different ways, whether it be in terms of functions, hardware, or software. The different functional units of the preferred embodiments can be grouped or subdivided in arbitrary ways, depending on applications.

The pre-existing material forming the basis for creating word associations in the preparation phase can be taken from any exploitable source: scanned pages printed documents with optical character recognition (OCR) produce a workable text, spoken text from conferences, radio, TV, films, or dictation, converted into a workable through a voice recognition software, etc.

Similarly, the text content for which an accompaniment is to be proposed can inputted through any suitable means: keyboard, OCR, handwriting recognition software and voice recognition software, etc. The latter can provide an application in which the accompaniment is made to a spoken text content, e.g. to produce a relevant real-time musical background to a live conversation picked up by one or several suitably positioned microphones, a telephone receiver, TV, radio, conference, poetry recitation etc.

Moreover, at least some of the means of the invention can be in a distributed, cooperating form, e.g. through a network. For instance, the crawler described - and possibly some of its peripheral functional modules - can be physically separate from other hardware implemented, e.g. being localised on different sites or in different machines.

Generally, the invention can be implemented with distributed computational units by applying techniques known per se, e.g. using approaches found in network-enabled computer games such as those for the PlayStation 2 (RTM) console by Sony Corporation (RTM).

## Claims

1. A method of automatically proposing an accompaniment to a text content to be processed (TC), comprising the steps of:
- in a preparation phase, analysing pre-existing material (18) containing text, using an automatically executing algorithm to create word associations comprising two or more words (MW) connected by at least one link (WL) according to at least one predetermined criterion,
- providing access to a number of candidate accompaniments, each having assigned at least one attribute value (IMI) that is susceptible of being comprised in said pre-existing material,
- identifying, when present in the text content to be processed, at least one word therein that is a word (MW) comprised in a said created word association,
- determining whether said created word association that comprises said identified word comprises a said attribute value, and
- proposing as said accompaniment at least one candidate accompaniment having a said attribute value comprised in said word association that comprises said identified word.

2. Method according to claim 1, further comprising a step of filtering said text to be processed using a parsing algorithm, so as to submit only meaningful or key words thereof to said identifying step.

3. Method according to claim 1 or 2, further comprising a step of selecting only meaningful or key words of the text of the pre-existing material, using a parsing algorithm.

4. Method according to any one of claims 1 to 3, wherein in said determining step, said attribute value and identified word in said word association are different from each other.

5. Method according to any one of claims 1 to 4, wherein a said criterion for creating a link between two or more words (MW) of said pre-existing material is that said two or more words co-occur in said pre-existing material (18) with a separating distance less than a determined threshold.

6. Method according to any one of claims 1 to 5, comprising a step of attributing a weighting or strength value to a said created link between two or more words (MW) co-occurring in said pre-existing material as a function of at least one among:
- the positional closeness of said co-occurring words in said pre-existing material,
- the frequency of co-occurrence of said co-occurring words in said pre-existing material,
- the uncommonness of at least one of said co-occurring words,
and wherein said accompaniment (32) is selected as function of said weighting value for the or each link between said word forming the attribute value and said identified word of the text content to be processed comprised in said word association.

7. Method according to any one of claims 1 to 6, wherein the selection of said accompaniment (32) takes into account the number of intervening links (WL) between said identified word of the text content to be processed and said attribute value.

8. Method according to any one of claims 1 to 7, wherein said pre-existing material (18) is accessed through a server system (12, 14, 16), using an automated searching tool (22).

9. Method according to claim 8, wherein said server system comprises the Internet network, said pre-existing material comprises at least one web page (18), and said automated searching tool is a search engine (22) programmed to crawl through successive web pages.

10. Method according to any one of claims 1 to 9, wherein said preparation phase is pursued at arbitrary moments to enrich and update said word associations for future proposed accompaniments.

11. Method according to any one of claims 1 to 10, wherein said attribute value is expressible by alphanumeric characters.

12. Method according to any one of claims 1 to 11, wherein said accompaniment is a music/sound accompaniment.

13. Method according to claim 12, wherein said attribute is an objectively identifiable attribute of said accompaniment.

14. Method according to claim 13, wherein for a music/sound accompaniment, said objective attribute value is at least one of:
- a music title,
- an artist name,
- a musical genre,
- cultural background information,
- a selection or the totality of the words forming lyrics of a music title.

15. Method according to any one of claims 1 to 14, wherein said attribute is a subjectively identifiable attribute of said accompaniment.

16. Method according to claim 15 wherein for a music/sound accompaniment, said subjective attribute value is at least one of:
- a global energy value,
- a closeness relationship between music titles,
- a mood,
- verbal evocations.

17. Method according to any one of claims 1 to 16, further comprising a step of compiling an electronic file (38) which comprises said text content (TC) and either:
i) at least one file enclosing the contents of an accompaniment, e.g. an audio file, or
ii) data for accessing the contents of an accompaniment,
said file being formatted to be readable for reproducing said text contents and said accompaniment.

18. Method according to claim 17, further comprising the step of incorporating into said electronic file (38) command data (MP) for executing at least one of the following:
- establishing the duration of the or each item of accompaniment to be perceived,
- synchronising the content of the accompaniment to a passage of a text content currently displayed, e.g. by estimation from a time since opening or by detecting scroll commands,
- adjusting a parameter affecting the perception of said accompaniment, e.g. the volume for an audio accompaniment.

19. An apparatus (1) for automatically proposing an accompaniment to a text content to be processed (TC), comprising:
- means, operative in a preparation phase, for analysing pre-existing material (18) containing text, using an automatically executing algorithm to create word associations comprising two or more words (MW) connected by at least one link (WL) according to at least one predetermined criterion,
- means for accessing a number of candidate accompaniments, each having assigned at least one attribute value (IMI) that is susceptible of being comprised in said pre-existing material,
- means for identifying, when present in the text content to be processed, at least one word therein that is a word (MW) comprised in a said created word association,
- means for determining whether said created word association that comprises said identified word comprises a said attribute value, and
- means for proposing as said accompaniment at least one candidate accompaniment having a said attribute value comprised in said word association that comprises said identified word.

20. Apparatus according to claim 19, further comprising further comprising means for filtering said text to be processed using a parsing algorithm, so as to submit only meaningful or key words thereof to said identifying means.

21. Apparatus according to any one of claims 19 or 20, wherein a said attribute value and identified word in said word association processed by said determining means are different from each other.

22. Apparatus according to any one of claims 19 to 21, wherein a said criterion for creating a link between two or more words (MW) of said pre-existing material is that two or more words co-occur in said pre-existing material (18) with a separating distance less than a determined threshold.

23. Apparatus according to any one of claims 19 to 22, further comprising means for attributing a weighting or strength value to a said created link between two or more words (MW) co-occurring in said pre-existing material as a function of at least one among:
- the positional closeness of said co-occurring words in said pre-existing material,
- the frequency of co-occurrence of said co-occurring words in said pre-existing material,
- the uncommonness of at least one of said co-occurring words,
and wherein said accompaniment (32) is selected as function of said weighting value for the or each link between said word forming the attribute value and said identified inputted word comprised in said word association.

24. Apparatus according to any one of claims 19 to 23, wherein the selection of said accompaniment (32) takes into account the number of intervening links (WL) between said identified input word and said attribute value.

25. Apparatus according to any one of claims 19 to 24, comprising automated searching tool (22) for accessing said pre-existing material (18) through a server system (12, 14, 16).

26. Apparatus according to claim 25, wherein said server system comprises the Internet network and said pre-existing material comprises at least one web page (18), and said automated searching tool is a search engine (22) programmed to crawl through successive web pages.

27. Apparatus according to any one of claims 19 to 26, wherein said accompaniment is a music/sound accompaniment.

28. Apparatus according to claim 27, wherein said attribute is an objectively identifiable attribute of said accompaniment.

29. Apparatus according to claim 28, wherein for a music/sound accompaniment, said objective attribute value is at least one of:
- a music title,
- an artist name,
- a musical genre,
- cultural background information,
- a selection or the totality of the words forming lyrics of a music title.

30. Apparatus according to any one of claims 19 to 29, wherein said attribute is a subjectively identifiable attribute of said accompaniment.

31. Apparatus according to claim 30 wherein for a music/sound accompaniment, said subjective attribute value is at least one of:
- a global energy value,
- a closeness relationship between music titles,
- a mood,
- verbal evocations.

32. Apparatus according to any one of claims 19 to 31, further comprising means for compiling an electronic file (38) comprising said text content (TC) and either:
i) at least one file enclosing the contents of an accompaniment, e.g. an audio file, or
ii) data for accessing the contents of an accompaniment,
said file being formatted to be readable for reproducing said text contents and said accompaniment.

33. Apparatus according to claim 32 further comprising means for incorporating into said electronic file (38) command data (MP) for executing at least one of the following:
- establishing the duration of the or each item of accompaniment to be perceived,
- synchronising the content of the accompaniment to a passage of a text content currently displayed, - adjusting a parameter affecting the perception of said accompaniment.

34. Apparatus according to any one of claims 19 to 33 configured to execute to the method according to any one claims 1 to 18.

35. An electronic file (40) produced according to the method of any one claims 1 to 18, comprising said text contents (TC ) and either:
i) at least one file enclosing the contents of an accompaniment, e.g. an audio file, or
ii) data for accessing the contents of an accompaniment,
said file being formatted to be readable for reproducing said text contents and said accompaniment.

36. Electronic file according to claim 35, further incorporating command data (MP) for executing at least one of the following:
- establishing the duration of the or each item of accompaniment to be perceived,
- synchronising the content of the accompaniment to a passage of a text content currently displayed, - adjusting a parameter affecting the perception of said accompaniment,

37. An electronic file (40) containing at least one word association produced by the method according to any one of claims 1 to 18.

38. A computer program loadable into the memory of a computer, comprising software code portions for performing the method according to any one of claims 1 to 18.

39. A data carrier containing the computer program of claim 38.

40. A storage medium containing the computer program of claim 39.
